# EUROPÄISCHE PATENTSCHRIFT

(11) **EP 0 504 619 B1**
(45) Veröffentlichungstag und Bekanntmachung des Hinweises auf die Patenterteilung: **04.01.1995**
(21) Anmeldenummer: 92103015.1
(22) Anmeldetag: 22.02.1992
(51) Int. Cl.: D06F 37/20, F16F 9/54

(54) **Waschmaschine**
Washing machine
Machine à laver le linge

(30) Priorität: 21.03.1991 DE 4109210
(43) Veröffentlichungstag der Anmeldung: 23.09.1992
(73) Patentinhaber: Bauknecht Hausgeräte GmbH, D-70565 Stuttgart (DE); WHIRLPOOL EUROPE B.V., 5507 SK Veldhoven (NL)
(72) Erfinder: Nelzow, Hartmann, W-7000 Stuttgart 1 (DE)
(74) Vertreter: Melio, Jan Dirk

(56) Entgegenhaltungen:
- WO-A-89/09153
- DE-A- 3 538 973
- US-A- 4 622 725

## Beschreibung

Die Erfindung bezieht sich auf eine Waschmaschine, deren Waschaggregat über Federn und Stoßdämpfer im Gehäuse schwingbeweglich gelagert ist, wobei zwischen jedem Stoßdämpferende und dem Gehäuse bzw. dem Aggregat ein zweiteiliges Verbindungsteil vorgesehen ist, das einerseits mit dem Auge des Stoßdämpfers und andererseits über sein freies Ende in einer Montageöffnung am Gehäuse bzw. Aggregat befestigt ist.

Eine derartige Waschmaschine ist z. B. durch die DE-OS 35 38 973 bekannt geworden. Bei dieser Bauart besteht das Verbindungsteil aus zwei gegeneinander federnde Wangen, die mittels einer Schraubverbindung am Auge des Stoßdämpfers befestigt sind und die in geöffnetem Zustand frei durch am Maschinengehäuse oder Waschaggregat vorgesehene Aufnahmeöffnungen hindurchführbar und durch Anziehen der Schraubverbindung darin verklemmbar sind.

Der Erfindung liegt die Aufgabe zugrunde, die Befestigung der Stoßdämpfer zwischen dem schwingenden Aggregat und dem statischen Gehäuse zu verbessern und zu vereinfachen.

Diese Aufgabe wird gemäß der Erfindung dadurch gelöst, daß gegeneinander beabstandeten Teile des Verbindungsteiles gegeneinander gerichtete Stege aufweisen, die beidseitig in das Auge des Stoßdämpfers eingeführt sind, und daß am freien Ende aneinanderliegenden Teile des Verbindungsteiles in die Montageöffnung eingeführt und durch Drehung hinter vorstehenden Kanten der Montageöffnung verrastet sind. Eine derartige Bauweise hat den Vorteil, daß keine. Schraubverbindung zur Befestigung der Stoßdämpfer mehr erforderlich ist. Ferner ist die Montage einfach und schnell durchzuführen. Die Befestigung gemäß der Erfindung erfordert wenig Bauteile, für die Befestigung am Gehäuse und am Aggregat können die gleichen Verbindungsteile verwendet werden. Die Montage erfolgt derart, daß zunächst die beiden Teile des Verbindungsteiles mit ihren Stegen in das Auge des Stoßdämpfers eingefügt und gegeneinander gedrückt werden. Sodann wird das Verbindungsteil mit seinem freien Ende in die Montageöffnung gesteckt und durch Drehen hinter vorstehenden Teilen der Montageöffnung verrastet. Dabei werden die beiden Teile des Verbindungsteiles fest gegeneinander gedrückt, so daß sie sich nicht voneinander weg bewegen können und die Verbindung am Auge nicht gelöst werden kann.

In einer vorteilhaften Ausgestaltung der Erfindung sind die im Auge des Stoßdämpfers liegenden Stege stirnseitig miteinander verrastet. Dies gibt, insbesondere bei der Montage, eine zusätzliche Vereinfachung, da beide Teile schon hier miteinander verbunden werden.

Damit sich das Verbindungsteil durch Rückdrehung nicht aus seiner Montageöffnung lösen kann, ist jedes Verbindungsteil durch eine zusätzliche Verriegelung innerhalb der Montageöffnung festgelegt. Diese Verriegelung erfolgt in weiterer Ausgestaltung der Erfindung z. B. über vorstehende Nippel und entsprechende Vertiefungen im Verbindungsteil und im Randbereich der Montageöffnung. Vorzugsweise enthält das Verbindungsteil die Nippel und das Randgebiet der Montageöffnung die entsprechenden Vertiefungen.

Zur Montageerleichterung sind beide Teile des Verbindungsteiles vorzugsweise an ihrem freien Ende durch ein Filmscharnier miteinander verbunden. Dadurch wird die Einführung der Stege in das Auge des Stoßdämpfers vereinfacht.

Um gleiche Verbindungsteile sowohl am Gehäuse als auch am Aggregat verwenden zu können, muß das Material im Bereich der Montageöffnung eine gleiche Dicke aufweisen. Bei Waschmaschinen ist z. B. die Kunststoffplatte am Behälter zur Aufnahme des Verbindungsteiles dicker als das entsprechende Blechteil am Gehäuse. Daher ist in weiterer Ausgestaltung der Erfindung das Gehäuse mit einer Blechprägung versehen, wodurch eine feste Verriegelung des eingeführten und durch Drehung festzulegenden Verbindungsteiles ermöglicht wird.

In der Zeichnung ist in den Fig. 1 bis 7 ein Ausführungsbeispiel des Gegenstandes gemäß der Erfindung schematisch dargestellt.
Fig. 1 zeigt eine schmatische Teil-Seitenansicht im Bereich eines Stoßdämpfers zwischen einem Gehäuse und dem Aggregat einer Waschmaschine,
Fig. 2 und 3 zeigen in einer vergrößerten Darstellung eine Seitenansicht und einen Schnitt durch einen Stoßdämpfer mit beidseitig angebrachten erfindungsgemäßen Verbindungsteilen,
Fig. 4 und 5 zeigen zwei schematische Stirnansichten des Stoßdämpfers im Bereich einer Montageöffnung,
Fig. 6 zeigt ein erfindungsgemäßes zweiteiliges Verbindungsteil in einer Seitenansicht, und
Fig. 7a und 7b zeigen eine Blechprägung im Bereich der Montageöffnung in zwei Ansichten.

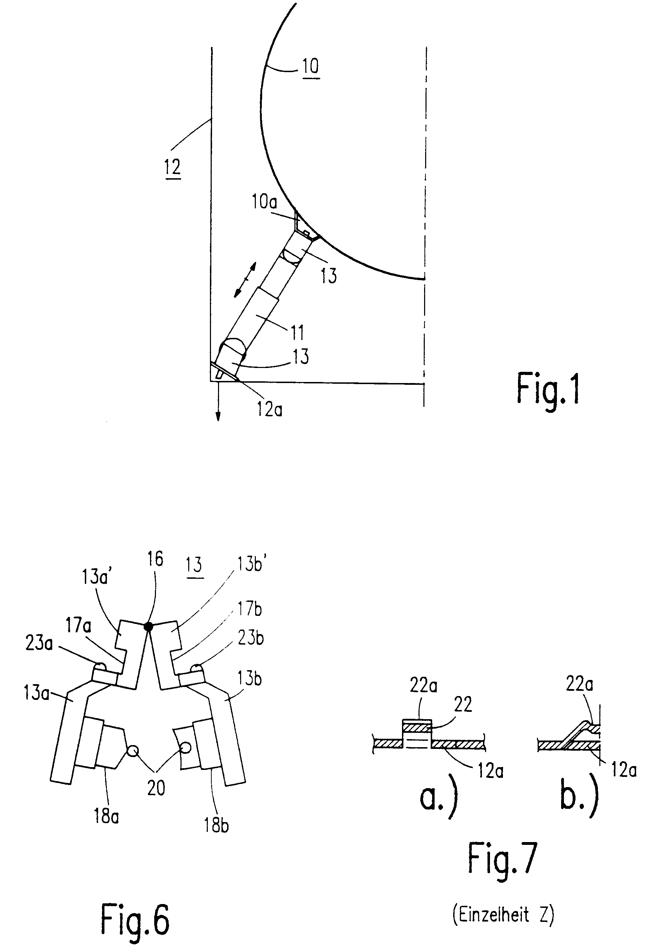

Gemäß Fig. 1 ist ein Waschaggregat 10 über mehrere Stoßdämpfer 11, von denen hier nur einer gezeigt ist, in einem Gehäuse 12 gelagert. Die Lagerung erfolgt über zweiteilige Verbindungsteile 13, die einerseits mit Augen 14 des Stoßdämpfer 11 verbunden sind und andererseits am Aggregat 10 bzw. am Gehäuse 12 in Montageöffnungen 15 befestigt sind.

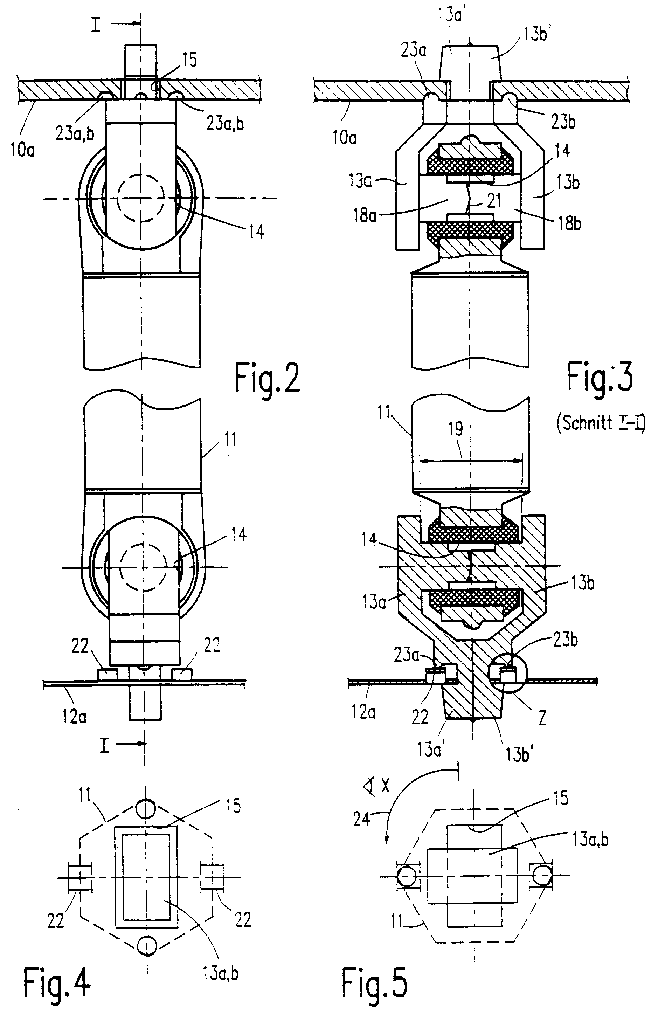

Das zweiteilige Verbindungsteil 13 besteht aus zwei Teilen 13a und 13b, die in diesem Ausführungsbeispiel an ihrem freien Ende über ein Filmscharnier 16 miteinander verbunden sind. Diese freien Enden beisitzen Rücksprünge 17a, 17b, über welche das Verbindungsteil 13 nach Drehung innerhalb der Montageöffnung 15 hinter deren Kanten verrastet ist. Mit 18a, 18b sind Stege bezeichnet, die an den Innenseiten der beiden Teile 13a, 13b gegeneinander gerichtet angeordnet sind. Im Bereich der Stege haben die Teile 13a, 13b im montierten Zustand (Fig. 3) einen Abstand 19 gegeneinander. Die Stege 18a, 18b besitzen stirnseitig eine Verriegelung 20 und liegen über Schrägflächen 21 in montiertem Zustand gegeneinander.

Wie insbesondere Fig. 3 zeigt, sind die Stege 18a, 18b von beiden Seiten in das Auge 14 eingefügt und stirnseitig über die Verriegelung 20 gegeneinander verriegelt. Fig. 1 bis 3 zeigen die Montage des Stoßdämpfers 11 einerseits an einem Träger 12a des Gehäuses 12 und andererseits an einem Träger 10a des Aggregates 10. Beide Träger 10a, 12a besitzen eine gleich große Montageöffnung 15. Da der Träger 12a nicht so dick ist wie der Träger 10a, enthält der Träger 12a eine Ausprägung 22, die in Fig. 7a, 7b in der Einzelheit Z vergrößert dargestellt ist. Diese Ausprägung hat die gleiche Höhe wie der Träger 10a und ist der Höhe des Rücksprunges 17a, 17b angepaßt. Die Ausprägung besitzt Mulden 22a, in die Nippel 23a, 23b des Verbindungsteile 13a, 13b nach Drehung eingreifen, so daß das Verbindungsteil 13 fest verriegelt ist. Die gleiche Verriegelung ergibt sich entsprechend an dem Träger 10a am Aggregat.

Fig. 4 zeigt eine Darstellung im Bereich der Montageöffnung 15, nachdem das freie Ende des Verbindungsteiles 13a, 13b eingesetzt ist, und Fig. 5 zeigt die gleiche Darstellung, jedoch nach Drehung des Verbindungsteiles um 90° in Pfeilrichtung 24.

## Patentansprüche

1. Waschmaschine, deren Waschaggregat (10) über Federn und Stoßdämpfer (11) im Gehäuse (12) schwingbeweglich gelagert ist, wobei zwischen jedem Stoßdämpferende und dem Gehäuse (12) bzw. dem Aggregat (10) ein zweiteiliges Verbindungsteil (13) vorgesehen ist, das einerseits mit dem Auge (14) des Stoßdämpfers (11) und andererseits über sein freies Ende in einer Montageöffnung (15) des Gehäuses (12) bzw. des Aggregates (10) befestigt ist, dadurch gekennzeichnet, daß gegeneinander beabstandete Teile (13a, 13b) des Verbindungsteiles (13) gegeneinander gerichtete Stege (18a, 18b) aufweisen, die beidseitig in das Auge (14) des Stoßdämpfers (11) eingeführt sind, und daß am freien Ende (13a', 13b') aneinanderliegende Teile des Verbindungsteiles (13) in die Montageöffnung (15) eingeführt und durch Drehung hinter vorstehenden Kanten der Montageöffnung (15) verrastet sind.

2. Waschmaschine nach Anspruch 1, dadurch gekennzeichnet, daß die im Auge (14) des Stoßdämpfers (11) liegenden Stege (18a, 18b) stirnseitig miteinander verrastet (20) sind.

3. Waschmaschine nach Anspruch 1 oder 2, dadurch gekennzeichnet, daß das Verbindungsteil (13) nach Drehung an seinen beiden Enden in einem Träger (10a, 12a) des Aggregates (10) und des Gehäuses (12) verriegelt (22a, 23,a, 23b) ist.

4. Waschmaschine nach Anspruch 3, dadurch gekennzeichnet, daß die Verriegelung über vorstehende Nippel (23a, 23b) und entsprechende Vertiefung (22a) im Verbindungsteil (13) und in den Trägern (10, 12a) erfolgt.

5. Waschmaschine nach einem der Ansprüche 1 bis 4, dadurch gekennzeichnet, daß die beiden aneinanderliegenden Enden (13a', 13b') des Verbindungsteiles (13) durch ein Filmscharnier (16) miteinander verbunden sind.

6. Waschmaschine nach einem der Ansprüche 1 bis 5, dadurch gekennzeichnet, daß das Gehäuse (12) im Bereich der Montageöffnung (15) mit einer Prägung (22) versehen ist.

## Claims

1. A washing machine, the washing unit (10) of which is mounted so as to be movable in an oscillating manner via springs and shock absorbers (11) in the housing (12), in which between each shock absorber end and the housing (12) or the unit (10) a connecting piece (13) in two parts is provided, which is secured on one side with the eye (14) of the shock absorber (11) and on the other side via its free end in a mounting opening (15) of the housing (12) or of the unit (10), characterised in that parts (13a, 13b) of the connecting piece (13), spaced apart with respect to each other, have cross-pieces (18a, 18b) directed towards each other, which are introduced on both sides into the eye (14) of the shock absorber (11), and that at the free end (13a', 13b'), parts of the connecting piece (13) lying adjacent to each other are introduced into the mounting opening (15) and are located through rotation behind projecting edges of the mounting opening (15).

2. A washing machine according to Claim 1, characterised in that the cross-pieces (18a, 18b) lying in the eye (14) of the shock absorber (11) are located (20) with each other on the end face.

3. A washing machine according to Claim 1 or 2, characterised in that the connecting piece (13) after rotation is locked (22a, 23a, 23b) at both its ends in a carrier (10a, 12a) of the unit (10) and of the housing (12).

4. A washing machine according to Claim 3, characterised in that the locking takes place by means of projecting nipples (23a, 23b) and a corresponding depression (22a) in the connecting piece (13) and in the carriers (10, 12a).

5. A washing machine according to one of Claims 1 to 4, characterised in that the two ends (13a', 13b') of the connecting piece (13), lying adjacent to each other, are connected with each other by a film hinge (16).

6. A washing machine according to one of Claims 1 to 5, characterised in that the housing (12) is provided in the region of the mounting opening (15) with an impression (22).

## Revendications

1. Machine à laver dont l'unité de lavage (10) est monté oscillante dans l'habillage (12) par l'intermédiaire de ressorts et d'amortisseurs (11), un élément de raccord (13) en deux parties étant prévu entre chaque extrémité d'amortisseur et l'habillage (12) ou l'unité (10), respectivement, cet élément de raccord (13) étant fixé d'une part avec l'oeil (14) de l'amortisseur (11) et d'autre part par l'intermédiaire de son extrémité libre dans une ouverture de montage (15) sur l'habillage (12) ou l'unité (10), respectivement, caractérisée en ce que des pièces (13a, 13b) à distance l'une en face de l'autre de l'élément de raccord (13) présentent des traverses (18a, 18b) qui sont orientées l'une en direction de l'autre et qui sont introduites de chaque côté dans l'oeil (14) de l'amortisseur (11), et en ce qu'à l'extrémité libre (13a', 13b'), des parties en contact l'une contre l'autre de l'élément de raccord (13) sont introduites dans l'ouverture de montage (15) et encliquetées par rotation derrière des arêtes de l'ouverture de montage (15) qui font saillie.

2. Machine à laver selon la revendication 1, caractérisée en ce que les traverses (18a, 18b) situées dans l'oeil (14) de l'amortisseur (11) sont encliquetées (20) l'une avec l'autre du côté frontal.

3. Machine à laver selon l'une ou l'autre des revendications 1 et 2, caractérisée en ce qu'après rotation, l'élément de raccord (13) est verrouillé (22a, 23a, 23b) à ses deux extrémités dans un support (10a, 12a) de l'unité (10) et de l'habillage (12).

4. Machine à laver selon la revendication 3, caractérisée en ce que le verrouillage est produit par l'intermédiaire de boutons (23a, 23b) et de creux (22a) correspondants ménagés dans l'élément de raccord (13) et dans les supports (10, 12a).

5. Machine à laver selon l'une quelconque des revendications 1 à 4, caractérisée en ce que les deux extrémités en contact l'une contre l'autre (13a', 13b') de l'élément de raccord (13) sont reliées l'une à l'autre par une charnière à bande (16).

6. Machine à laver selon l'une quelconque des revendications 1 à 5, caractérisée en ce que l'habillage (12) est pourvu d'un relief (22) dans la région de l'ouverture de montage (15).
